(19) Europäisches Patentamt
European Patent Office
Office européen des brevets

(11) Veröffentlichungsnummer: **0 127 876**
**B1**

(12) # EUROPÄISCHE PATENTSCHRIFT

(45) Veröffentlichungstag der Patentschrift: **12.08.87**

(51) Int. Cl.⁴: **C 25 B 3/02**, C 07 F 9/40

(21) Anmeldenummer: **84106146.8**

(22) Anmeldetag: **30.05.84**

(54) **Verfahren zur Herstellung von Phosphonsäureestern und neue Phosphonsäureverbindungen.**

(30) Priorität: **01.06.83 DE 3319795**

(43) Veröffentlichungstag der Anmeldung: **12.12.84 Patentblatt 84/50**

(45) Bekanntmachung des Hinweises auf die Patenterteilung: **12.08.87 Patentblatt 87/33**

(84) Benannte Vertragsstaaten: **AT BE CH DE FR GB IT LI NL**

(56) Entgegenhaltungen:
**FR-A-1 604 652**
**US-A-3 054 821**

**CHEMICAL & PHARMACEUTICAL BULLETIN, Band 27, Nr. 5, Mai 1979, Seiten 1271-1273, Pharmaceutical Society of Japan; HIDENOBU OHMORI u.a.: "Anodic phosphonylation of anthracene"**
**JOURNAL OF THE CHEMICAL SOCIETY, PERKIN TRANSACTIONS I, Nr. 8, 1979, Seiten 2023-2026; HIDENOBU OHMORI u.a.: "Anodic oxidation of organophosphorus compounds. Part 2. Formation of dialkyl arylphosphonates via arylation of trialkyl phosphites"**
**SOVIET INVENTIONS ILLUSTRATED, Section CH: Chemical, 25. Januar 1984, Woche 8349**
**SYNTHESIS, Nr. 1, Januar 1983, Seiten 69-71, Georg Thieme Verlag, Stuttgart, DE; A. OSUFKA u.a.: "Synthesis of arenephosphonates by copper(I) iodide-promoted arylation of phosphite anions"**
**SYNTHESIS, Nr. 1, Januar 1981, Seiten 56-57, Georg Thieme Verlag, Stuttgart, DE; T. HIRAO u.a.: "A novel synthesis of dialkyl arenephosphonates"**

(73) Patentinhaber: **HOECHST AKTIENGESELLSCHAFT, Postfach 80 03 20, D-6230 Frankfurt am Main 80 (DE)**

(72) Erfinder: **Farnung, Winfried, Dr., Stadthäuser Mühle 8, D-6115 Münster (DE)**

**EP 0 127 876 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der vorliegenden Erfindung ist ein elektrochemisches Verfahren zur Herstellung von aromatischen und heteroaromatischen Phosphonsäureestern.

Die Herstellung von Arylphosphonsäuren nach herkömmlichen Syntheseverfahren durch direkte Einführung der Phosphorgruppierung ohne Anwendung von elektrochemischen Methoden ist aus Houben-Weyl, "Organische Phosphorverbindungen", Bd. XII/1, S. 338 ff. (1963) und Ergänzungsband "Phosphorverbindungen II", E 2, S. 300 ff. (1982) bekannt.

Diese Methoden weisen jedoch anwendungstechnische Nachteile auf wie bspw. Arbeiten mit wasserfreien Lösungsmitteln, Beseitigung von Schadstoffen, die als Nebenprodukte anfallen, schwer zugängliche Vorstufen und unbefriedigende Ausbeuten.

Es ist weiterhin bekannt, daß Aromaten mit Trialkylphosphiten elektrochemisch phosphonylierbar sind (H. Ohmori, S. Nakai, M. Masui, J.C.S., Perkin I, 1979, 2023 und Chem. Pharm. Bull., 27, 1271 (1979)).

In einer geteilten Zelle werden an glasartigem Kohlenstoff als Anodenmaterial die Umsetzungen unter kontrolliertem Potential durchgeführt. Die elektrochemische Umsetzung führt jedoch nur zu einem Trialkoxyarylphosphoniumsalz, das dann in einem zweiten Verfahrensschritt mit Natriumjodid in Aceton zum Phosphonsäureester umgesetzt werden muß.

Wegen der Bedeutung der Arylphosphonsäuren als Zwischenprodukte für Pflanzenschutzmittel (s. z.B. Europ. Patentanmeldung Nr. 14684), als Bestandteil von schwerentflammbaren Polymeren, als wirksame Gruppierung von grenzflächenaktiven Stoffen, usw., war es wünschenswert, durch ein einstufiges Verfahren, das von gut zugänglichen Vorläufern ausgeht, einen wirtschaftlich vorteilhaften Zugang zu Arylphosphonsäuren zu erhalten.

Diese Aufgabe konnte überraschenderweise dadurch gelöst werden, daß man eine aromatische oder heterocyclische Verbindung in Gegenwart von Trialkylphosphit in einer ungeteilten Zelle anodisch oxidiert.

Gegenstand dervorliegenden Erfindung ist daher ein Verfahren zur Herstellung von Phosphonsäureestern der Formel I, worin

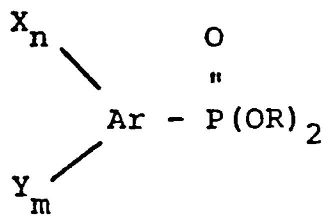

(I)

Ar Phenyl, ein zwei- oder mehrkerniger Aromatenrest, Cycloheptatrienyl, Furyl oder Pyridyl

X ($C_1$-$C_{18}$)-Alkyl, ($C_1$-$C_6$)-Alkoxy, das durch Cyano substituiert sein kann, Phenyl, Naphthyl, Benzyloxy, Phenoxy, Benzoxazolyloxy, Benzthiazolyloxy, Chinoxalinyloxy, Chinolinyloxy, Pyridyloxy, Naphthoxy, Phenylmercapto, Naphthylmercapto, wobei diese Aromaten bzw. Heteroaromaten durch ein bis 3 Reste, welche ($C_1$-$C_4$)-Alkyl bedeuten, oder die Bedeutung des Restes Y besitzen, substituiert sein können, Phenylcarbonylamino, ($C_1$-$C_6$)-Alkylcarbonylamino, ($C_1$-$C_6$)-Alkylmercapto, ($C_1$-$C_4$)-Alkoxy-($C_1$-$C_4$)-alkyl, ($C_1$-$C_4$)-Alkoxycarbonylamino, ($C_1$-$C_4$)-Alkoxycarbonyloxy, ($C_1$-$C_4$)-Alkoxycarbonyl-($C_1$-$C_4$)-alkoxy, mono- oder di ($C_1$-$C_4$)-Alkylaminocarbonyloxy, Phenylaminocarbonyloxy, oder zwei orthoständige Reste X bilden zusammen eine aliphatische Kette mit 3 oder 4 C-Atomen, wobei bis zu 2 nicht benachbarte C-Atome durch Sauerstoff ersetzt sein können, und diese Kette ein- oder zweifach durch ($C_1$-$C_4$)-Alkyl, insbesondere Methyl substituiert sein kann,

Y Halogen, ($C_1$-$C_4$)-Alkoxycarbonyl, ($C_1$-$C_4$)-Alkylcarbonyl, Nitro, Nitroso, Cyano, ($C_1$-$C_4$)-Alkylsulfonyl, Phenylsulfonyl, ($C_1$-$C_4$)-Alkoxysulfonyl, Phenoxysulfonyl, Di[($C_1$-$C_4$)-alkoxy]-phosphinyl, Di[($C_1$-$C_4$)-alkyl]phosphinyl, [O-($C_1$-$C_4$)-Alkoxy-O-($C_1$-$C_4$)-alkyl]-phosphinyl, durch 1 bis 6 Halogenatome substituiertes ($C_1$-$C_4$)-Alkyl, insbesondere $CF_3$, Formyl, Amidosulfonyl, das im Aminorest durch 1 bis 2 ($C_1$-$C_4$)-Alkylreste oder durch einen Phenylrest substituiert sein kann,

R ($C_1$-$C_6$)-Alkyl,

n 1, 2 oder 3 und

m 0, 1, 2 oder 3 bedeuten, wobei m bevorzugt kleiner als n ist,

dadurch gekennzeichnet, daß man eine Verbindung der Formel II in Gegenwart einer Verbindung

$X_n$ - Ar $Y_m$
(II)

$P(OR)_3$
(III)

der Formel III, wobei die Reste $X_n$, $Y_m$, Ar, R die obengenannten Bedeutungen besitzen, und eines ($C_1$-$C_4$)-Alkanols in einer ungeteilten Elektrolysezelle anodisch oxidiert.

Die Reste R, X und Y in den obigen Formeln können gleiche oder verschiedene Bedeutungen besitzen.

Die Verbindungen der Formel I sind zum Teil neu.

Das ($C_1$-$C_4$)-Alkanol hat im vorliegenden Verfahren die Funktion eines Lösungsmittels und Reagens, da es mit

der Phosphorkomponente der Formel III unter Aufnahme eines Restes -OR und gegebenenfalls unter Austausch der Alkoxyreste reagiert.

Vorzugsweise wird Methanol oder Äthanol verwendet.

Es war überraschend, daß das alkoholische Lösungsmittel während der Elektrolyse die Verbindung der Formel II nicht angreift, obwohl beispielsweise Methoxylierungen von Aromaten unter ähnlichen Bedingungen beschrieben sind. (F. Beck, Elektroorganische Chemie, Verlag Chemie GmbH, Weinheim/Bergstr. 1974, N.L. Weinberg, Technique of Electroorganic Synthesis, Part. I, J. Wiley & Sons, New York, 1974). Das Trialkylphosphit vermag sich unerwarteterweise gegen das um den Aromaten konkurrierende nucleophile Lösungsmittel durchzusetzen.

Die Verwendung von ($C_1$-$C_4$)-Alkanolen als Lösungsmittel gegenüber Acetonitril als Solvens, wie in den Publikationen JCS Perkin I, 1979, 2023 und Chem. Pharm. Bull., 27, 1271 (1979) beschrieben,ist außerordentlich vorteilhaft, da sie den Aufbau eines gut leitfähigen Elektrolyten gestattet.

Im Gegensatz zu den Publikationen JCS Perkin I, 1979, 2023 und Chem. Pharm. Bull., 27, 1 271 (1979) arbeitet das erfindungsgemäße Verfahren unter homogenen Bedingungen, da die intermediär an der Anode entstehenden Protonen nicht durch eine Base gebunden werden müssen; vielmehr werden sie durch Entladung an der Kathode als gasförmiger Wasserstoff dem Elektrolytsystem entzogen.

Das erfindungsgemäße Verfahren arbeitet vorteilhafterweise unter galvanostatischen Bedingungen und ist deshalb im Gegensatz zu JCS Perkin I 1979, 2023 und Chem. Pharm. Bull., 27, 1271 (1979), die eine Potentiostatische Fahrweise beschreiben, auch in technischen Elektrolysezellen durchführbar.

Die Konzentration der aromatischen Ausgangsverbindung der Formel II kann im Bereich von 1 bis etwa 40 Gew.-% bezogen auf den Gesamtelektrolyten variieren. Sie liegt vorzugsweise zwischen 15 und 25 Gew.-%.

Vorteilhafterweise arbeitet man mit demjenigen Trialkylphosphit der Formel III dessen Reste R mit dem Alkylrest des Alkanols (Lösungsmittels) identisch ist, da man sonst durch Umesterungen mit dem Lösungsmittel gemischte Arylphosphonsäureester erhält.

Die Konzentration an Trialkylphosphit der Formel III sollte im Vergleich zur Menge an aromatischer Komponente etwa äquimolar sein. Darüber hinaus ist ein Überschuß oder Unterschuß an Trialkylphosphit für das Verfahren nicht schädlich. Vorzugsweise setzt man die Reaktionspartner in äquimolaren Verhältnis ein und dosiert bei Bedarf während der Elektrolyse Trialkylphosphit nach.

Als Lösungsmittel können neben dem ($C_1$-$C_4$)-Alkanol gegebenenfalls noch weitere inerte Lösungsmittel wie z.B. Acetonitril, Methylenchlorid, Aceton und Esher zugegeben werden.

Als Festelektrolyt benutzt man z.B. die in der Elektrochemie üblichen Leitsalze. Geeignet sind alle im verwendeten Lösungsmittel gut löslichen Salze, die unter den Versuchsbedingungen stabil sind. Im wesentlichen sind dies Alkalisalze oder Oniumsalze der Säuren HF, $HBF_4$, $HPF_6$, $HClO_4$, $H_2SO$, $H_3PO_4$, Toluolsulfonsäure. Bevorzugt sind die Salze Tetramethylammoniummethylsulfat, Kaliumfluorid, Tetramethylammoniumdimethylphosphat.

Die Konzentration der Leitsalze liegt zweckmäßig im Bereich von etwa 0,01 bis 20 Gew.-%, vorzugsweise jedoch in den Grenzen von etwa 0,1 bis 5 Gew.-%, bezogen auf den Gesamtelektrolyten.

Die Wahl des Elektrodenmaterials ist nicht kritisch. Bei dem erfindungsgemäßen Verfahren lassen sich alle Elektrodenmaterialien einsetzen, die unter den Elektrolysebedingungen beständig sind. So z.B, Graphit, graphitgefüllte Kunststoffe, Platin, Glaskohlenstoff und edelmetallbeschichtete Titanelektroden. Als Kathoden kommen vorzugsweise Materialien mit einer niedrigen Wasserstoffüberspannung zum Einsatz. Es kann jedoch auch Graphit verwendet werden.

Die Anodenstromdichten können breit zwischen 5 und 500 $mA/cm^2$ variiert werden, vorzugsweise zwischen 50 und 200 $mA/cm^2$ und insbesondere zwischen etwa 50 und 100 $mA/cm^2$.

Der Stromumsatz soll vorteilhaft etwa 2 Faraday pro Mol der Verbindung II betragen. Jedoch sind auch niedere sowie höhere Stromzusätze prinzipiell möglich, je nachdem ob Teilumsatz oder ein möglichst quantitativer Umsatz angestrebt wird.

Die Elektrolysetemperatur liegt im allgemeinen zwischen 0°C und der Siedetemperatur der Elektrolytmischung. Bevorzugt ist ein Temperaturbereich zwischen 30 und 45°C.

Die Aufarbeitung der Elektrolyseausträge geschieht in bekannter Weise. Lösungsmittel und eventuell noch vorhandenes Ausgangsmaterial können destillativ zurückgewonnen und in die Elektrolyse zurückgeführt werden. Auch das Leitsalz kann für einen Folgeansatz wiederverwendet werden.

Die nachfolgenden Beispiele dienen zur Erläuterung der Erfindung.

**Beispiel 1**

Herstellung von 2,5-Dimethoxyphenyl-phosphonsäuredimethylester

a) Apparatur: ungeteilte thermostatisierbare Glastopfzelle mit einem Volumen von ca. 300 ml, Innenthermometer, Rüchflußkühler, Magnetrührer

| | |
|---|---|
| Anode: | Platinnetzzylinder |
| Kathode: | Platinnetzzylinder |
| Temperatur: | 30 - 32° C |
| Anodenstromdichte: | 17.3 mA/cm² |
| Strommenge | 5.6 Ah |
| Elektroyt: | 13.8 g (0.1 Mol) Hydrochinondimethylether<br>12.4 g Trimethylphospit<br>7.0 g $Me_4N^+$ $MeSO_4^-$<br>200 ml MeOH |

Der Elektroyt wird bei einem Druck von 200 Torr eingeengt, mit Wasser versetzt und mit Methylenchlorid extrahiert. Nach dem Trocknen der organischen Phase destilliert man das Lösungsmittel ab und fraktioniert den Rückstand unter Ölpumpenvakuum.

Man erhält 22,35 g 2,5-Dimethoxyphenyl-phosphonsäuredimethylester. Das entspricht einer Materialausbeute von 91 % und einer Stromausbeute von 87 %.

b) Apparatur: wie unter Beispiel 1 beschrieben

| | |
|---|---|
| Anode: | Platinnetzzylinder |
| Kathode: | Platinnetzzylinder |
| Temperatur: | 30 - 35° C |
| Anodenstromdichte: | 17.0 mA/cm² |
| Strommenge: | 4,15 Ah |
| Elektrolyt: | 13,8 g Hydrochinodimethylether<br>16,6 g Triethylphosphit<br>7,0 g $Me_4N^+$ $MeSO_4^-$<br>200 ml Ethanol |

Nach der Elektrolyse enthält der Rohelektrolyt nach GC in Fl.%: 11,8 % Triethylphosphit, 16,5 % Edukt und 56,4 % 2,5-Dimethoxyphenyl-phosphonsäurediethylester. Nach wässriger Aufarbeitung mit nachfolgender Destillation erhält man 3,62 g Hydrochinondimethylether und 14,95 g 2,5-Dimethoxyphenyl-phosphonsäuredimethylester. Daraus ergibt sich eine Ausbeute von 74 %, die Stromausbeute beträgt 71 %.

c) Apparatur: monopolare ungeteilte Durchflußzelle, Elektrodenabstand ca. 1 mm, Elektrolyt wird während der Elektrolyse umgepumpt

| | |
|---|---|
| Anode: | Graphit |
| Kathode: | VA-Stahl |
| Temperatur: | 26° C |
| Anodenstromdichte: | 25 mA/cm² |

1) Fl % = Flächenprozent

| | |
|---|---|
| Strommenge: | 70 Ah |
| Elektroyt | 165,6 g (0,1 mol) Hydrochinondimethylether<br>148,8 g Trimethylphosphit<br>60 g $Me_4N^+$ $MeSO_4^-$<br>2 400 ml Methanol |

Nach beendeter Elektrolyse enthält der Rohelektrolyt 2,3 Fl.% Edukt und 80,4 Fl.% 2,5-Dimethoxyphenyl-phosphonsäuredimethylester.

Das Methanol wird am Rotationsverdampfer abdestilliert, das Leitsalz anschließend durch Zugabe von Methylenchlorid aus dem Rückstand gefüllt und zurückisoliert. Die fraktionierte Destillation der organischen Phase liefert 212,6 g an Produkt, was einer Ausbeute von 72 % und einer Stromausbeute von 66 % entspricht.

**Beispiel 2**

Herstellung von 3,4-Dimethoxyphenyl-phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 34°C |
| Anodenstromdichte: | 19 $mA/cm^2$ |
| Strommenge: | 8,64 Ah |
| Elektroyt: | 13,8 g (0,1 Mol) Brenzcatechindimethylether |
| | 16,4 g Trimethylphosphit |
| | 7,0 g $Me_4N^+ MeSO_4^-$ |
| | 200 ml Methanol |

Zur Produktisolierung wird das Methanol abdestilliert, der Rückstand mit Methylenchlorid/Wasser extrahiert, die organische Phase getrocknet und anschließend wieder eingeengt. Durch fraktionierte Destillation erhält man 20,68 g (85 %) 3,4-Dimethoxyphenyl-phosphonsäuredimethylester bei einer Stromausbeute von 52 %.

**Beispiel 3**

Herstellung von 2,4-Dimethoxyphenyl-phosphonsäuredimethylester

| | | |
|---|---|---|
| a) | Apparatur: | wie unter Beispiel 1 beschrieben |
| | Anode: | Platinnetzzylinder |
| | Kathode: | Platinnetzzylinder |
| | Temperatur: | 33 - 40°C |
| | Anodenstromdichte: | 19 $mA/cm^2$ |
| | Strommenge: | 8,55 Ah |
| | Elektrolyt: | 13,8 g (0,1 Mol) Resorcindimethylether |
| | | 16,2 g Trimethylphosphit |
| | | 7,0 g $Me_4N^+ MeSo_4^-$ |
| | | 200 ml Methanol |

Aufarbeitung wie unter Beispiel 4. Durch fraktionierte Destillation erhält man 20,15 g (82 %) 2,4-Dimethoxyphenyl-phosphonsäuredimethylester bei einer Stromausbeute von 51 %.

| | | |
|---|---|---|
| b) | Apparatur: | wie unter Beispiel 1 beschrieben |
| | Anode: | Platinnetzzylinder |
| | Kathode: | Platinnetzzylinder |
| | Temperatur: | 33 - 37°C |
| | Anodenstromdichte: | 19 $mA/cm^2$ |
| | Strommenge: | 8,39 Ah |
| | Elektrolyt: | 13,8 g (0,1 Mol) Resorcindimethylether |
| | | 15,1 g Trimethylphosphit |
| | | 5,0 g KF |
| | | 200 ml Methanol |

Die Aufarbeitung erfolgt analog Beispiel 4. Man erhält destillativ 19,17 g (78 %) 2,4-Dimethoxyphenyl-phosphonsäuredimethylester, was einer Stromausbeute von 50 % entspricht.

**Beispiel 4**

Herstellung von 2- und 4-Methoxyphenyl-phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 33 - 37°C |
| Anodenstromdichte: | 19 $mA/cm^2$ |
| Strommenge: | 5.82 Ah |
| Elektrolyt: | 10,8 g (0,1 Mol) Anisol |
| | 15,4 g Trimethylphosphit |
| | 7,0 g $Me_4N^+$ $MeSO_4$- |
| | 200 ml MeOH |

Nach Beendigung der Elektrolyse enthält der Rohelektrolyt 2,2 Fl.% Edukt und zwei isomere Produkte: 2-Methoxyphenyl-phosphonsäuredimethylester (41,0 Fl.%) und 4-Methoxyphenyl-phosphonsäuredimethylester (25,9 Fl.%).

Die Aufarbeitung in Analogie zu Beispiel 4 liefert 13,98 g Destillat, das ortho- und para- Isomeres im Verhältnis 56 : 44 enthält. Die Gesamtausbeute beträgt demnach 65 % bei einer Stromausbeute von 60 %

**Beispiel 5**

Herstellung von Naphthalin-1 (und 2) -phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 25 - 30°C |
| Anodenstromdichte: | 19 $mA/cm^2$ |
| Strommenge: | 7,3 Ah |
| Elektrolyt: | 12,8 g (0,1 Mol) Naphtalin |
| | 20,4 g Trimethylphosphit |
| | 7,0 g $Me_4N^+$ $SO_4$- |
| | 200 ml Methanol |

Die Aufarbeitung erfolgt analog Beispiel 4 und liefert neben 3,3 g Naphthalin 14,2 g (81 %) eines Isomerengemisches von Naphthalin-1-phosphonsäuredimethylester (88,8 Fl.%) und Naphthalin-2-phosphonsäuredimethylester (9,7 Fl.%). Die Stromausbeute beträgt 44 %.

**Beispiel 6**

Herstellung von 2-Methoxynaphthalin-1-phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 34 - 39°C |
| Anodenstromdichte: | 19 $mA/cm^2$ |
| Strommenge: | 5,52 Ah |
| Elektrolyt: | 15,8 g (0,1 Mol) 2-Methozynaphtahlin |
| | 16,1 g Trimethylphosphit |
| | 7,0 g $NMe_4^+$ $MeSO_4$- |
| | 200 ml Methanol |

Die Aufarbeitung des Elektrolyten, der neben 5,8 Fl.% Edukt 73,7 Fl.% 2-Methoxynaphthalin-1 -phosphonsäuredimethylester enthält, liefert durch Aufarbeitung in Analogie zu Beispiel 4 19,56 g (80 %) produkt neben 1,31 g Ausgangssubstanz. Die Stromausbeute beträgt 71 %.

**Beispiel 7**

Herstellung von 2- (und 4) -Acetamidophenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 25 - 30°C |
| Anodenstromdichte: | 19 mA/cm$^2$ |
| Strommenge: | 10,35 Ah |
| Elektrolyt: | 13,5 g (0,1 Mol) Acetanilid |
| | 17,95 g Trimethylphosphit |
| | 7,0 g $Me_4N^+ MeSO_4^-$ |
| | 200 ml MeOH |

Nach beendeter Elektrolyse wird das Methanol im Rotationsverdampfer abdestilliert, der Rückstand mit Wasser versetzt und mehrmals ausgeethert. Nach dem Trocknen der organischen Phase wird das Lösungsmittel abgezogen. Der z.T. Kristallin anfallende Sumpf wird auf eine Nutsche gegeben und abgesaugt, die erhaltenen Kristalle mit wenig Aceton nachgewaschen.

Man erhält 4,0 g 4-Acetamidophenyl-phosphonsäuredimethylester. Das Filtrat unterwirft man einer fraktionierten Destillation, wobei man eine Fraktion von 9,35 g erhält, die zu 87 % aus 2-Acetamidophenylphosphonsäuredimethylester und zu 13 % aus Edukt besteht. Die Gesamtausbeute beträgt demnach 55 % bei einer Stromausbeute von 26 %.

**Beispiel 8**

Herstellung von Diphenyl-2 (und 4) -phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 30 - 35°C |
| Anodenstromdichte: | 19 mA/cm$^2$ |
| Strommenge: | 8,64 Ah |
| Elektrolyt: | 15,4 g (0,1 Mol) Diphenyl |
| | 21,4 g Trimethylphosphit |
| | 7,0 g $Me_4N^+ MeSO_4^-$ |

Der Rohelektrolyt enthält nach der Elektrolyse 3,5 % Edukt, 27,6 % Diphenyl-2-phosphonsäuredimethylester und 32 % Diphenyl-4-phosphonsäuredimethylester (in Fl.%) und wird in Analogie zu Beispiel 4 aufgearbeitet. Durch Destillation erhält man 1,25 g Diphenyl zurück, an Produktgemisch 19,44 g (81 %). Die Stromausbeute beträgt 46 %.

**Beispiel 9**

Herstellung von 2-Methoxy-5-chlor-phenylphosphonosäuredimethylester

| | |
|---|---|
| Apparatur: | wie unter Beispiel 1 beschrieben |
| Anode: | glasartiger Kohlenstoff |
| Kathode: | VA-Stahl |
| Temperatur: | 30 - 35°C |
| Anodenstromdichte: | 36,4 mA/cm$^2$ |
| Strommenge: | 6,95 Ah |
| Elektrolyt: | 14,3 g (0,1 Mol) 4-Chloranisol |
| | 23,7 g Trimethylphosphit |
| | 5,0 g $Me_4N^+ MeSO_4^-$ |
| | 200 ml Methanol |

Im Elektrolytaustrag liegen 1,9 % Edukt, 2,6 % 2-Chlor-5-Methoxyphenyl-phosphonsäuredimethylester und 45,9 % 2-Methoxy-5-chlor-phenyl-phosphonsäuredimethylester vor (Fl.%). Durch Aufarbeitung analog Beispiel 4 erhält man 18,42 g (74. %) Produktgemisch bei 57 % Stromausbeute.

**Beispiel 10**

Herstellung von 2- (und 4) -Phenyloxy-phenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 31 - 34°C |
| Anodenstromdichte: | 19 $mA/cm^2$ |
| Strommenge: | 6,55 Ah |
| Elektrolyt: | 17,0 g (0,1 Mol) Diphenylether |
| | 18,9 g Trimethylphosphit |
| | 7,0 g $Me_4N^+$ $MeSO_4^-$ |
| | 200 ml Methanol |

Nach Abbruch der Elektrolyse enthält der Elektrolyt 4,1 % Edukt, 32,6 % 2-Phenyloxy-phenylphosphonsäuredimethylester und 42,7 % 4-Phenyloxy-phenylphosphonsäuredimethylester. Die Aufarbeitung analog Beispiel 4 führt zu 18,55 g (67 %) Isomerengemisch (o/p = 44/56). Die Stromausbeute liegt bei 55 %.

**Beispiel 11**

Herstellung von 5 (2)-carbomethoxy-2-(5)-methoxy-phenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 30 - 40°C |
| Anodenstromdichte: | 19 $mA/cm^2$ |
| Strommenge: | 7,52 Ah |
| Elektrolyt: | 16,6 g (0,1 Mol) 4-Methoxybenzoesäuremethylester |
| | 16,3 g Trimethylphosphit |
| | 7,0 g $Me_4N^+$ $MeSO_4^-$ |
| | 200 ml Methanol |

Nach Beendigung der Elektrolyse wird das Lösungsmittel am Rotationsverdampfer abdestilliert, der Rückstand mit Wasser verserzt und mehrmals ausgeethert. Nach dem Trocknen der organischen Phase wird der Ether abgezogen. Es bleiben 7,2 g kristallines Ausgangsmaterial zurück. Die Extraktion der wässrigen Phase mit Methylenchlorid und anschließende destillative Aufarbeitung führen zu 12,2 g (79 %) Produktgemisch, das zu 83 Fl.% aus 5-Carbomethoxy-2-methoxyphenyl-phosphonsäuredimethylester und zu 17 Fl.% aus 2-Carbomethoxy-5-methoxy-phenyl-phosphonsäuredimethylester besteht. Die Stromausbeute liegt bei 32 %.

**Beispiel 12**

Herstellung von 2 (5)-p-Tolyloxy-5 (2)-methyl-phenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 32 - 37°C |
| Anodenstromdichte: | 19 $mA/cm^2$ |
| Strommenge: | 9,30 Ah |
| Elektrolyt: | 19,8 g (0,1 Mol) Ditolyether |
| | 25,5 g Trimethylphosphit |
| | 5,0 g $Me_4N_+$ $MeSO_4^-$ |
| | 200 ml Methanol |

Die Aufarbeitung erfolgt in Analogie zu Beispiel 4. Durch Destillation im Kugelrohrofen erhält man 20,55 g (67 %) eines Isomerengemisches, das zu 3 Teilen aus 2-p-Tolyloxy-5-methyl-phenylphosphonsäuredimethylester und zu 1 Teil aus 2-Methyl-5-p-tolyloxy-phenylphosphonsäuredimethylester besteht. Die Stromausbeute beträgt 39 %.

**Beispiel 13**

Herstellung von 2,5-Dimethoxy-4-dimethylphosphonato-phenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 35 - 37°C |
| Anodenstromdichte: | 19 mA/$cm^2$ |
| Strommenge: | 7,79 Ah |
| Elektrolyt: | 12,3 g (0,05 Mol) 2,5-Dimethozyphenylphosphonsäuredimethylester<br>16,9 g Trimethylphosphit<br>7,0 g $Me_4N^+$ MeSOi4$^-$<br>200 ml Methanol |

Nach Beendigung der Elektrolyse wird der Rohelektrolyt am Rotationsverdampfer eingeengt, dann der Rückstand mit Wasser versetzt und mit Methylenchlorid mehrmals extrahiert. Nach dem Trocknen der organischen Phase über wasserfreiem Natriumsulfat wird das Lösungsmittel weitgehend abgezogen und der Rückstand mit Isopropylether versetzt. Es fällt ein kristalliner Niederschlag von 5,4 g (31 %) 2,5-Dimethoxy-4-dimethylphosphonato-phenylphosphonsäuredimethylester. Die Stromausbeute beträgt 11 %.

**Beispiel 14**

Herstellung von 2 (5)-tert. Butoxy-5-(2)-methyl-phenylphosphonsäuredimethylester

| | |
|---|---|
| Apparatur: | wie unter Beispeil 1 beschrieben |
| Anode: | Platinnetzzylinder |
| Kathode: | Platinnetzzylinder |
| Temperatur: | 25 - 31°C |
| Anodenstromdichte: | 19 mA/$cm^2$ |
| Strommenge: | 8,36 Ah |
| Elektrolyt: | 16,4 g (0,1 Mol) p-Kresyl-tert. butyl-ethyl<br>20,5 g Trimethylphosphit<br>7,0 g $Me_4N^+$ $MeSO_4^-$<br>200 ml Methanol |

Nach der Beendigung der Elektrolyse wird wie unter Beispiel 4 beschrieben aufgearbeitet. Man erhält 15,8 g (58 %) Produktgemisch, das zu 4 Teilen aus 2-tert. Butoxy-5-methyl-phenyl-phosphonsäuredimethylester und aus 1 Teil 2-Methyl-5-tert. butoxy-phenylphosphonsäuredimethylester besteht. Die Stromausbeute beträgt 37 %.

**Beispiel 15**

Herstellung von 2 (5)-Methoxy-5 (2)-methyl-phenylphosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 31 - 32°C |
| Anodenstromdichte: | 19 mA/$cm^2$ |
| Strommenge: | 4,71 Ah |
| Elektrolyt: | 12,2 (0,1 Mol) 4-Methylanisol<br>15,2 g Trimethylphosphit<br>7,0 g $Me_4N^+$ $MeSO_4^-$<br>200 ml Methanol |

Nach der Beendigung der Elektrolyse wird in gleicher Weise wie unter Beispiel 4 beschrieben verfahren. Die Aufarbeitung des Rohelektrolyten, der neben 11,8 Fl.% Ausgangsmaterial 56,1 Fl.% 2-Methoxy-5-methyl-phenylphosphonsäuredimethylester und 11,5 Fl.% 2-Methyl-5-methoxy-phenylphosphonsäuredimethylester enthält, liefert 16,31 g Produktgemisch der beiden Isomeren. Aus dem Verlauf werden noch 1,9 g Ausgangsmaterial isoliert, so daß sich die Materialausbeute zu 84 % und die Stromausbeute zu 80 % berechnen.

**Beispiel 16**

Herstellung von 5-Acetyl-2-methoxy-phenyl-phosphonsäuredimethylester

| | |
|---|---|
| Apparatur: | wie unter Beispiel 1 beschrieben |
| Anode: | Platinnetzzylinder |
| Kathode: | Platinnetzzylinder |
| Temperatur: | 30 - 35°C |
| Anodenstromdichte: | 19 mA/cm$^2$ |
| Strommenge: | 7,0 g Ah |
| Elektrolyt: | 15,0 g (0,1 Mol) 4-Methoxyacetophenon<br>20,1 g Trimethylphospit<br>7,0 g $Me_4N^+$ $MeSO_4^-$<br>200 ml Methanol |

Die Aufarbeitung nach Elektrolyseende erfolgt analog der Beschreibung unter Beispiel 4. Destillativ werden 4,05 g Ausgangsstoff zurückgeworden. Aus der hochsiedenden Fraktion (163-185°C/0,03 mm) werden mit $CH_2Cl_2$ / Isopropylether 2,95 g (16 %) 2-Methoxy-5-acetyl-phenylphosphonsäuredimethylester kristallisiert. Die Stromausbeute beträgt 8,8 %.

**Beispiel 17**

Herstellung von Furan-2-phosphonsäuredimethylester

| | |
|---|---|
| Apparatur: | wie unter Beispiel 1 beschrieben |
| Anode: | Plantinnetzzylinder |
| Kathode: | Platinnetzzylinder |
| Temperatur: | 28 - 32°C |
| Anodenstromdichte: | 17,0 mA/cm$^2$ |
| Strommenge: | 17,0 Ah |
| Elekrolyt: | 20,4 g (0,3 Mol) Furan<br>50,0 g Trimethylphosphit<br>7,0 g $NMe_4^+$ $MeSO_4^-$<br>180 ml Methanol |

Nach der Beendigung der Elektrolyse enthält der Rohelektrolyt 7,5 Fl.% 2,5-Dimethoxy-2,5-dihydrofuran und 0,9 Fl.% Furan-2-phosphon-säuredimethylester. Die Aufarbeitung erfolgt wie unter Beispiel 4 beschrieben, auf die Rückisolierung von Furan und Trimethylphosphit wurden verzichtet. Durch Destillation erhält man 4,15 g Furan-2-phosphonsäuredimethylester (7,5 % Stromausbeute).

**Beispiel 18**

Herstellung von 2'-Diethylphosphonyl-4'-methoxybenzanilid

| | |
|---|---|
| Apparatur: | ungeteilte thermostatisierbare Glastopfzelle mit einem Volumen von ca. 300 ml, Innenthermometer, Rückflußkühler, Magnetrührer |
| Anode: | Platinnetzzylinder |
| Kathode: | Platinnetzzylinder |
| Temperatur: | 30 - 35°C |
| Anodenstromdichte: | 14 mA/cm$^2$ |
| Strommenge: | 2,44 Ah |
| Elektrolyt: | 5,65 g (0,025 mol) 4'-Methoxybenzanilid<br>5 g $Me_4N^+$ $MeSO_4^-$<br>22 g Triäthylphosphit<br>150 ml Ethanol<br>50 ml Aceton |

Nach Beendigung der Elektrolyse wird das Lösungsmittel abdestilliert, der Sumpf in Aceton aufgenommen und das Leitsalz abfiltriert. Das Filtrat wird erneut eingeengt und im Ölpumpenvakuum von leichter flüchtigen Anteilen befreit. Nach einer Andestillation im Kugelrohrofen hinterbleibt ein öliger Rückstand, der an neutralem Aluminiumoxid in Benzin (60-90°C)/Isopropylether-Gemisch im Veihältnis 1 : 1 chromatographiert wird. Man erhält 5,06 g 2'-Diethylphosphonyl-4'-methoxybenzanilid. Dies entspricht einer Materialausbeute von 56 % und einer Stromausbeute von 31 %.

**Beispiel 19**

Herstellung von 2-Acetamido-naphthalin-1-phosphonsäuredimethylester

| | |
|---|---|
| Apparatur: | wie unter Beispiel 1 a beschrieben |
| Anode: | Platinnetzzylinder |
| Kathode: | Platinnetzzylinder |
| Temperatur: | 24 - 25° C |
| Anodenstromdichte: | 24 mA/$cm^2$ |
| Strommenge: | 6.17 Ah |
| Elektrolyt: | 17.0 g N-2-Naphthylacetamid |
| | 29.2 g Trimethylphosphit |
| | 7.6 g $Me_4N^+$ $MeSO_4^-$ |

Nach beendeter Elektrolyse wird wäßrig aufgearbeitet und das Rohprodukt im Ölpumpenvakuum andestilliert.
Der Rückstand (24,5 g, kristallin) entspricht einer Rohausbeute von 91 %. Durch Chromatographie an $SiO_2$ in Aceton werden 17,92 g Produkt erhalten (Materialausbeute 66,5 %, Stromausbeute 53,1 %).

**Beispiel 20**

Herstellung von 3-Dimethoxyphosphoryl-4-acetamidobenzolsulfonsäureamid

| | |
|---|---|
| Apparatur: | wie unter Beispiel 1 a beschrieben |
| Anode: | Platinnetzzylinder |
| Kathode: | Platinnetzzylinder |
| Temperatur: | 30 - 35° C |
| Anodenstromdichte: | 17 - 24 mA/$cm^2$ |
| Strommenge: | 8.16 Ah |
| Elektrolyt: | 10.7 g 4-Acetamidobenzolsulfonamid |
| | 22 g Trimethylphosphit |
| | 6 g $Me_4N^+MeSO_4^-$ |

Nach dem Abbruch der Elektrolyse wird das Lösungsmittel abdestilliert, der Rückstand mit Methylenchlorid/Wasser ausgeschüttelt, und die organische Phase über Natriumsulfat getrocknet. Trockenmittel und Methylenchlorid werden abgetrennt und der Rückstand nach Andestillation im Ölpumpenvakuum mit i-Propylether/Acetonitril (1:1) versetzt. Man isoliert 4 g kristallines Produkt neben weiteren 2,4 g Produkt, das durch Chromatographie an $SiO_2$ mit Acetonitril/i-Propylether gewonnen wird. Materialausbeute 48,3 %, Stromausbeute 13 %.

**Beispiel 21**

Herstellung von 2,4,6-Trimethylbenzolphosphonsäuredimethylester

| | |
|---|---|
| Apparatur: | wie unter Beispiel 1 c beschrieben |
| Anode: | Graphit |
| Kethode: | VA-Stahl |
| Temperatur: | 20 - 23° C |
| Anodenstromdichte: | 35 mA/$cm^2$ - 15 mA/$cm^2$ |
| Strommenge: | 126 Ah |
| Elektrolyt: | 240 g Mesitylen |
| | 354 g Trimethylphosphit |
| | 50 g $Me_4N^+MeSO_4^-$ |
| | 2500 ml MeOH |

Nach der Elektrolyse enthält der Elektrolyt neben 15,8 Fl.% Produkt noch 26,1 Fl.% Mesitylen und 13,1 Fl.% Trimethylphosphit. Zur Aufarbeitung wird der Rohelektrolyt am Rotationsverdampfer eingeengt. Das Leitsalz wird mit Essigester aus dem Rückstand ausgefällt und durch Abfiltrieren zurückgewonnen. Nach fraktionierter Destillation erhält man 141 g 2,4,6-Trimethylbenzolphosphonsäuredimethylester, entsprechend einer Materialausbeute von 31 % und einer Stromausbeute von 26 %.

**Beispiel 22**

Herstellung von 2-Acetamido-5-chlor-benzolphosphonsäuredimethylester

| | |
|---|---|
| Apparatur: | wie unter Beispiel 1 c beschrieben |
| Anode: | Graphit |
| Kathode: | VA-Stahl |
| Temperatur: | 30 - 32°C |
| Anodenstromdichte: | 30 - 6 mA/cm$^2$ |
| Strommenge: | 199 Ah |
| Elektrolyt: | 191 g 4-Chloracetanilid |
| | 316 g Trimethylphosphit |
| | 51 g $Me_4N^+MeSO_4^-$ |
| | 2500 ml MeOH |

Zur Aufarbeitung wird der Rohelektrolyt eingeengt und der Rückstand anschließend im Ölpumpenvakuum bis 75°C Kopftemperatur andestilliert. Der kristallisierende Rückstand wird mit 1,5 l Essigester versetzt und auf dem Dampfbad erhitzt; hierauf wird das ungelöste Leitsalz durch Abfiltrieren abgetrennt und das Filtrat einkonzentriert. Man erhält einen Kristallbrei (187 g), aus dem durch Säulenchromatographie 150 g des 2-Acetamido-5-chlor-benzolphosphonsäuredimethylesters isoliert werden. Das entspricht einer Materialausbeute von 48 % bei einer Stromausbeute von 15 %.

**Beispiel 23**

Herstellung von 2,4,6-Cycloheptatrien-phosphonsäuredimethylester

| | |
|---|---|
| Apparatur: | wie unter Beispiel 1 a beschrieben |
| Anode: | Platinnetzzylinder |
| Kathode: | Platinnetzzylinder |
| Temperatur: | 26 - 30°C |
| Anodenstromdichte: | 23 mA/cm$^2$ |
| Strommenge: | 10.89 Ah |
| Elektrolyt: | 18.4 g Cycloheptatrien |
| | 30.4 g Trimethylphosphit |
| | 5.0 g $Me_4N^+MeSO_4^-$ |
| | 200 ml MeOH |

Zur Aufarbeitung wird das Lösungsmittel abdestilliert und anschließend wäßrig aufgearbeitet. Durch Destillation bei 0,3 mbar erhält man 22,9 g an 2,4,6-Cycloheptatrien-phosphonsäuredimethylester. (Materialausbeute: 57 %, Stromausbeute: 55 %).

**Beispiel 24**

Herstellung von Fluorenphosphonsäureester

| | |
|---|---|
| Apparatur: | wie unter Beispiel 1 a beschrieben |
| Anode: | Platinnetzzylinder |
| Kathode: | Platinnetzzylinder |
| Temperatur: | 30 - 35°C |
| Anodenstromdichte: | 23 mA/cm$^2$ |
| Strommenge: | 24.58 Ah |
| Elektrolyt: | 24.9 g Flouren |
| | 33.3 Trimethylphosphit |
| | 5.0 g $Me_4N^+MeSO_4^-$ |
| | 170 ml MeOH |
| | 30 ml Methylenchlorid |

Nach der Elektrolyse wird der Elektrolyt eingeengt und wäßrig aufgearbeitet. Durch Destillation im Kugelrohrofen erhält man 23,5 g eines Gemisches zweier isomerer Fluorenphosphonsäuredimethylester, wahrscheinlich ein Gemisch von Fluoren-2- und Fluoren-4-phosphonsäuredimethylester im Verhältnis 66 : 34 (Materialausbeute 68,3 %, Stromausbeute 18,6 %).

**Beispiel 25**

Herstellung von 4-Benzyloxy-naphthalin-1-phosphonsäuredimethylester

| | |
|---|---|
| Apparatur: | wie unter Beispiel 1 a beschrieben |
| Anode: | Platinnetzzylinder |
| Kathode: | Platinnetzzylinder |
| Temperatur: | 34 - 36° C |
| Anodenstromdichte: | 23 mA/$cm^2$ |
| Strommenge: | 5.84 Ah |
| Elektrolyt: | 23.4 g 1-Naphyl-benzylether |
| | 15.4 g Trimethylphosphit |
| | 7.0 g $Me_4N^+MeSO_4^-$ |
| | 200 ml MeOH |

Nach dem Abschalten des Stromes wird der Elektrolyt eingeengt und wäßrig aufgearbeitet. Das erhaltene Rohprodukt wird aus Isopropylether umkristallisiert. Man erhält 22,2 g Produkt bei einer Materialausbeute von 65 % und einer Stromausbeute von 60 %.

**Beispiel 26**

Herstellung von 2,3,5,6-Tetramethylbenzolphosphonsäuredimethylester

| | |
|---|---|
| Apparatur: | wie unter Beispiel 1 a beschrieben |
| Anode: | Platinnetzzylinder |
| Kathode: | Platinnetzzylinder |
| Anodenstromdichte: | 17.5 mA/$cm^2$ |
| Strommenge: | 10.4 Ah |
| Elektrolyt: | 13.4 g Durol |
| | 28.6 g Trimethylphosphit |
| | 5.0 g $Me_4N^+MeSO_4^-$ |
| | 200 ml MeOH |

Der Elektrolyt enthält nach Abbruch der Elektrolyse 56 Fl.% an 2,3,5,6-Tetramethylbenzolphosphonsäuredimethylester neben 29 Fl.% Durol.

**Beispiele 27 - 34**

Wie unter Beispiel 1 a beschrieben, wurden die in der Tabelle angegebenen Phosphonsäureester mit den entsprechenden Ausgangsverbindungen hergestellt. Die Verbindungen wurden durch Destillation im Kugelrohröfen oder durch Chromatographie als Öle isoliert.

Erhaltene Verbindungen der Formel I, worin Ar = Phenyl und der Phosphonsäurerest die Position 1 am Phenylring einnimmt.

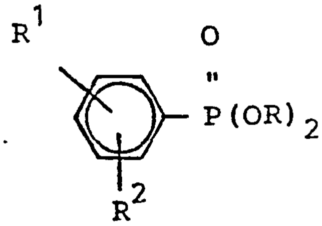

| Bsp. Nr. | $R^1$ | $R^2$ | R | Isomeren-verhältnis | Gesamt-ausbeute |
|---|---|---|---|---|---|
| 27 | 4-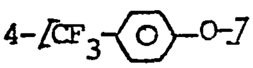<br>2- " | 2-($CH_3O$-)<br>4- " | $CH_3$<br>" | 53/47 | 81 % |
| 28 | 2-BzO-<br>5- " | 5-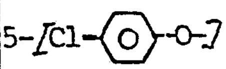<br>2- " | " | / | 31 % |
| 29 | 2- " | 5-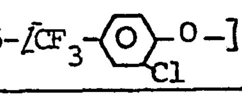 | " | - | 65 % |
| 30 | 2-[$CH_3CO_2CCH(CH_3)O$-]<br>5- " | 5-[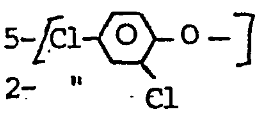<br>2- " | "<br>" | 80/20 | 68 % |
| 31 | 2-<br>5- " | 5-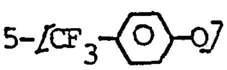<br>2- " | "<br>" | 75/25 | 68 % |
| 32 | 2-(6-Cl-Benz-oxazol-2-yl)<br>5- " | 5-[$EtO_2CCH(CH_3)O$-]<br>2- " | $C_2H_5$<br>" | 4/1 | 65 % |
| 33 | 2 [$NC-CH_2O$]<br>5- " | 5-Cl<br>2-Cl | $CH_3$<br>" | 86/14 | 56 % |
| 34 | 2-BzO-<br>4- " | 4-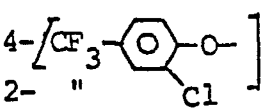<br>2- " | "<br>" | - | 70 % |

Bz = Benzyl
Et = Ethyl

**Beispiel 35**

Herstellung von 2,3-Dihydro-2,2-dimethyl-5-dimethoxyphosphoryl-7-methylamin ocarbonyloxy-benzofuran

Analog Beispiel 1 a wurde 0,1 Mol Carbofuran (2,3-Dihydro-2,2-dimethyl-7-methylaminocarbonyloxy-benzofuran) mit Trimethylphosphit umgesetzt. Das Produkt wurde in einer Ausbeute von 26 % in Form eines Öls erhalten.

**Vergleichsbeispiel**

Herstellung von 2'-Diethyl-phosphonyl-4'-methoxybenzanilid

Gemäß dem Verfahren Von H. Ohmoni et al., Chem. Pharm. Bull., 27, 1271 (1979), Beispiel b wird 2'-Diethyl-phosphonyl-4'-methoxybenzanilid ausgehend von Triäthylphosphit und 4'-Methoxybenzanilid in Acetonitril als Lösungsmittel in einer Ausbeute von nur 38 % erhalten.

**Patentansprüche**

1. Verfahren zur Herstellung von Phosphonsäureestern der Formel I, worin

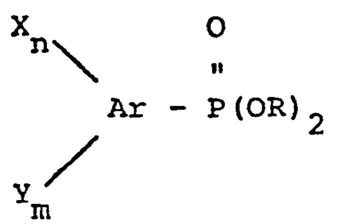

(I)

Ar Phenyl, ein zwei- oder mehrkerniger Aromatenrest, Cycloheptatrienyl, Furyl oder Pyridyl

X $(C_1-C_{18})$-Alkyl, $(C_1-C_6)$-Alkoxy, das durch Cyano substituiert sein kann, Phenyl, Naphthyl, Benzyloxy, Phenoxy, Benzoxazolyloxy, Benzthiazolyloxy, Chinoxalinyloxy, Chinolinyloxy, Pyridyloxy, Naphthoxy, Phenylmercapto, Naphthylmercapto, wobei diese Aromaten bzw. Heteroaromaten durch ein bis 3 Reste, welche $(C_1-C_4)$-Alkyl bedeuten, oder die Bedeutung des Restes Y besitzen substituiert sein können, Phenylcarbonylamino, $(C_1-C_6)$-Alkylcarbonylamino, $(C_1-C_6)$-Alkylmercapto, $(C1-C_4)$-Alkoxy-$(C_1-C_4)$-alkyl, $(C_1-C_4)$-Alkoxycarbonylamino, $(C_1-C_4)$-Alkoxycarbonyloxy, $(C_1-C_4)$-Alkoxycarbonyl-$(C_1-C_4)$-alkoxy, mono- oder di $(C_1-C_4)$-Alkylaminocarbonyloxy, Phenylaminocarbonyloxy, oder zwei orthoständige Reste X bilden zusammen eine aliphatische Kette mit 3 oder 4 C-Atomen, wobei bis zu 2 nicht benachbarte C-Atome durch Sauerstoff ersetzt sein können, und diese Kette ein- oder zweifach durch $(C_1-C_4)$-Alkyl, insbesondere Methyl substituiert sein kann,

Y Halogen, $(C_1-C_4)$-Alkoxycarbonyl, $(C_1-C_4)$-Alkylcar-bonyl, Nitro, Nitroso, Cyano, $(C_1-C_4)$-Alkylsulfonyl, Phenylsulfonyl, $(C_1-C_4)$-Alkoxysulfonyl, Phenoxysulfonyl, Di[$(C_1-C_4)$-alkoxy]-phosphinyl, Di[$(C_1-C_4)$-alkyl]-phosphinyl, [O-$(C_1-C_4)$-Alkoxy-O-$(C_1-C_4)$-alkyl]-phosphinyl, durch 1 bis 6 Halogenatome substituiertes $(C_1-C_4)$-Alkyl, insbesondere $CF_3$, Formyl, Amidosulfonyl, das im Aminorest durch 1 bis 2 $(C_1-C_4)$-Alkylreste oder durch einen Phenylrest substituiert sein kann,

R $(C_1-C_6)$-Alkyl,

n 1, 2 oder 3 und

m 0, 1, 2 oder 3 bedeuten,

dadurch gekennzeichnet, daß man eine Verbindung der Formel II in Gegenwart einer Verbindung

$$X_n - Ar - Y_m \quad \text{(II)} \qquad\qquad P(OR)_3 \quad \text{(III)}$$

der Formel III, wobei die Reste Xn, Ym, Ar, R die obengenannten Bedeutungen besitzen, und eines $(C_1-C_4)$-Alkanols in einer ungeteilten Elektrolysezelle anodisch oxidiert.

2. Verfahren gemäß Anspruch 1, dadurch gekennzeichnet, daß als $(C_1-C_4)$-Alkanol Methanol oder Ethanol eingesetzt wird.

3. Verfahren gemäß Ansprüchen 1 und 2, dadurch gekennzeichnet, daß der Alkylrest des Alkanols identisch ist mit den Resten R der Verbindung der Formel III.

4. Verfahren gemäß Ansprüchen 1 bis 3, dadurch gekennzeichnet, daß als Verbindung der Formel I in einer Konzentration von 1 bis 40 Gew.-% bezogen auf den Gesamtelektrolyten vorliegt.

5. Verfahren gemäß Ansprüchen 1 bis 4, dadurch gekennzeichnet, daß neben dem Alkanol noch weitere inerte Lösungsmittel Zugegeben werden.

**Claims**

1. A process for the preparation of phosphonic acid esters of the formula

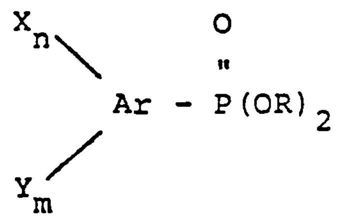 .. (I)

in which Ar denotes phenyl, a binuclear or polynuclear aromatic radical, cycloheptatrienyl, furyl or pyridyl,

X denotes $(C_1-C_{18})$-alkyl and $(C_1-C_6)$-alkoxy which can be substituted by cyano, or denotes phenyl, naphthyl, benzyloxy, phenoxy, benzoazolyloxy, benzthiazolyloxy, quinoxalinyloxy, quinolinyloxy, pyridyloxy, naphthoxy, phenylmercapto and naphthylmercapto, it being possible for these aromatic or hetero-aromatic radicals to be substituted by one to 3 radicals which represent $(C_1-C_4)$-alkyl or have the meaning of the radical Y, phenylcarbonylamino, $(C_1-C_6)$-alkylcarbonylamino, $(C_1-C_6)$-alkylmercapto, $(C_1-C_4)$-alkoxy-$(C_1-C_4)$-alkyl, $(C_1-C_4)$-alkoxycarbonylamino, $(C_1-C_4)$-alkoxycarbonyloxy, $(C_1-C_4)$-alkoxycarbonyl-$(C_1-C_4)$-alkoxy, mono-$(C_1-C_4)$-alkylaminocarbonyloxy, di-$(C_1-C_4)$-alkylaminocarbonyloxy or phenylaminocarbonyloxy or two radicals X in the ortho-position together form an aliphatic chain having 3 or 4 carbon atoms, it being possible for up to 2 non-adjacent carbon atoms to be replaced by oxygen, and for this chain to be monosubstituted or disubstituted by $(C_1-C_4)$-alkyl, in particular methyl,

Y denotes halogen, $(C_1-C_4)$-alkoxycarbonyl, $(C_1-C_4)$-alkylcarbonyl, nitro, nitroso, cyano $(C_1-C_4)$-alkylsulfonyl, phenylsulfonyl, $(C_1-C_4)$-alkoxysulfonyl, phenoxysulfonyl, di-[$(C_1-C_4)$-alkoxy]-phosphinyl, di-[$(C_1-C_4)$-alkyl]-phosphinyl, [O-$(C_1-C_4)$-alkoxy-O-$(C_1-C_4)$-alkyl]-phosphinyl or $(C_1-C_4)$-alkyl which is substituted by 1 to 6 halogen atoms, in particular $CF_3$, formyl or amidosulfonyl which can be substituted in the amino radical by 1 to 2 $(C_1-C_4)$-alkyl radicals or by a phenyl radical,

R denotes $(C_1-C_6)$-alkyl,

n denotes 1, 2 or 3 and

m denotes 0, 1, 2 or 3,

which comprises subjecting a compound of the formula II

$X_n$ - Ar - $Y_m$

to anodic oxidation in an undivided electrolytic cell in the presence of a compound of the formula III

$P(OR)_3$
(III)

and of a $(C_1-C_4)$-alkanol, the radicals $X_n$, $Y_m$, Ar and R having the meanings mentioned above.

2. The process as claimed in claim 1, wherein the $(C_1-C_4)$-alkanol employed is methanol or ethanol.

3. The process as claimed in any of claims 1 and 2, wherein the alkyl radical of the alkanol is identical with the radicals R in the compound of the formula III

4. The process as claimed in any of claims 1 to 3, wherein the compound of the formula I is present in a concentration of 1 to 40 % by weight, relative to the total electrolyte.

5. The process as claimed in any of claims 1 to 4, wherein, in addition to the alkanol, further inert solvents are also added.

**Revendications**

1. Procédé pour préparer des esters phosphoniques répondant à la formule I:

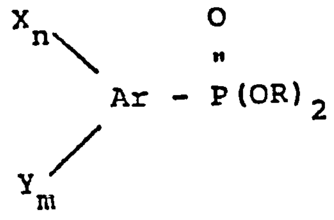

(I)

dans laquelle

Ar représente un radical phényle, un radical aromatique à deux ou à plus de deux noyaux, un radical cycloheptatriényle, un radical furyle ou un radical pyridyle,

X représente un alkyle en $C_1$-$C_{18}$, un alcoxy en $C_1$-$C_6$, éventuellement porteur d'un radical cyano, un phényle, un naphtyle, un benzyloxy, un phénoxy, un benzoxazolyloxy, un benzothiazolyoxy, un quinoxalinyloxy, un quinolyloxy, un pyridyloxy, un naphtyloxy, un phénylthio ou un naphtylthio (ces radicaux aromatiques ou hétéro-aromatiques pouvant porter de un à trois substituants qui sont des alkyles en $C_1$-$C_4$ ou qui ont la signification de Y), un phénylcarbonylamino, un ($C_1$-$C_6$)alkylcarbonylamino, un alkylthio en $C_1$-$C_6$, un ($C_1$-$C_4$)alcoxy-($C_1$-$C_4$)alkyle, un ($C_1$-$C_4$)alcoxycarbomylamino, un ($C_1$-$C_4$)alcoxycarbonyloxy, un ($C_1$-$C_4$)alcoxycarbonyl-($C_1$-$C_4$)alcoxy, un mono- ou di-($C_1$-$C_4$)alkyl-aminocarbonyloxy ou un phénylaminocarbonyloxy, ou deux radicaux X en ortho forment ensemble une chaîne aliphatique à trois ou quatre atomes de carbone, jusqu'à deux atomes de carbone non voisins pouvant être remplacés par de l'oxygène, et cette chaîne pouvant porter un ou deux substituants pris dans l'ensemble formé par les alkyles en $C_1$-$C_4$, plus particulièrement un ou deux méthyles,

Y représente un halogène, un ($C_1$-$C_4$)alcoxycarbonyle, un ($C_1$-$C_4$)alkylcarbonyle, un nitro, un nitroso, un cyano, un alkylsulfonyle en $C_1$-$C_4$, un phénylsulfonyle, un alcoxysulfonyle en $C_1$-$C_4$, un phénoxysulfonyle, un bis-(($C_1$-$C_4$)alcoxy)-phosphinyle, un bis(($C_1$-$C_4$)alkyl)-phosphinyle, un (O-($C_1$-$C_4$)alcoxy-O-($C_1$-$C_4$)alkyl)-phosphinyle, un alkyle en $C_1$-$C_4$ porteur d'un à six atomes d'halogènes, plus particulièrement d'un radical $CF_3$, un formyle ou un aminosulfonyle dont le radical amino porte un ou deux alkyles en $C_1$-$C_4$ ou un phényle,

R représente un alkyle en $C_1$-$C_6$,

n désigne un nombre égal à 1, à 2 ou à 3 et

m désigne un nombre égal à 0, à 1, à 2 ou à 3,

procédé caractérisé en ce qu'on oxyde anodiquement, dans une cellule d'électrolyse non compartimentée, un composé de formule II en présence d'un composé de formule III:

$X_n$ - Ar - $Y_m$ (II)  $P(OR)_3$ (III),

formules dans lesquelles $X_n$, $Y_m$, Ar et R ont les significations précédemment données, et en présence d'un alcanol contenant de un à quatre atomes de carbone.

2. Procédé selon la revendication 1 caractérisé en ce qu'on utilise, comme alcanol en $C_1$-$C_4$, le méthanol ou l'éthanol.

3. Procédé selon l'une des revendications 1 et 2, caractérisé en ce que le radical alkyle de l'alcanol est identique au radical R du composé de formule III.

4. Procédé selon l'une quelconque des revendications 1 à 3, caractérisé en ce que le composé de formule I est à une concentration de 1 à 40% en poids par rapport à l'ensemble de l'électrolyte.

5. Procédé selon l'une quelconque des revendications 1 à 4, caractérisé en ce que, en plus de l'alcanol, on ajoute d'autres solvants inertes.